# EUROPÄISCHE PATENTSCHRIFT

(11) **EP 1 408 257 B1**
(45) Veröffentlichungstag und Bekanntmachung des Hinweises auf die Patenterteilung: **17.08.2005**
(21) Anmeldenummer: 03022779.7
(22) Anmeldetag: 10.10.2003
(51) Int. Cl.: F16H 49/00, F16C 1/20

(54) **Bewegungsübertragungsvorrichtung**
Motion transmitting device
Dispositif pour la transmission d'un mouvement

(30) Priorität: 11.10.2002 DE 10247601
(43) Veröffentlichungstag der Anmeldung: 14.04.2004
(73) Patentinhaber: Ziegler, Sven, 73061 Ebersbach (DE)
(72) Erfinder: Ziegler, Sven, 73061 Ebersbach (DE)
(74) Vertreter: Fürst, Siegfried

(56) Entgegenhaltungen:
- BE-A- 480 008
- DE-A- 1 965 210
- DE-U- 20 104 006
- FR-A- 1 561 464
- GB-A- 108 536
- US-A- 2 002 709
- US-A- 6 159 125
- US-B1- 6 289 788

## Beschreibung

Die vorliegende Erfindung beschreibt eine Vorrichtung, mit der die Bewegung eines Körpers, z.B. einer Spritzgießform einer Spritzgießvorrichtung, ein erstes Betätigungselement betätigt und die Vorrichtung diese Bewegung/Betätigung auf ein weiteres Betätigungselement überträgt. Dabei erfolgt im Allgemeinen eine Änderung der Bewegungs-/Betätigungsrichtung.

Das bedeutet, dass z.B. ein Auswerfelement an einer Spritzgießform sich von oben nach unten oder in horizontaler Richtung bewegt, dabei ein erster Steuerstößel nach unten gedrückt wird und über die Betätigungsvorrichtung, im Stand der Technik z.B. eine einfache Wippe, der zweite Stößel angelenkt und demzufolge nach oben bzw. in die andere horizontale Richtung gedrückt wird. Mit dem zweiten Stößel kann dann beim Verfahren des Auswerfelements relativ zu einer Spritzgießform diese von dem zweiten Stößel durchgriffen werden, so dass der zweite Stößel die sich in der unteren Form befindliche, soeben hergestellte, Spritzgussformteil aus dieser Form abhebt bzw. auswirft.

Die im Stand der Technik verwendeten Wippen als Auswerfelemente an Gießformen sind aber als nachteilig anzusehen, da sie nur über einen kurzen Hubweg verfügen sowie, dass die beweglichen Teile an der Wippe einer ständigen Schmierung z.B. durch Öl oder Silikon bedürfen. Dies ist allerdings bei der Herstellung von Spritzgießteilen aus Kunststoff als sehr nachteilig anzusehen, da das Öl/Silikon die Qualität der erhaltenen Spritzgießteile beeinträchtigen kann. Insbesondere bei der Herstellung elektronischer Bauteile und Teilen für die Medizintechnik ist eine Kontamination mit Öl/Silikon unerwünscht.

Eine Bewegungsübertragungsvorrichtung mit den Merkmalen des Oberbegriffs von Anspruch 1 zeigt DE-U-20 104 006.

Ausgehend vom Stand der Technik ist der Fachmann vor die Aufgabe gestellt, eine Betätigungsübertragungsvorrichtung derart zu verbessern, dass einerseits der Hub, der übertragbar ist, vergrößert wird, als auch eine Produktverschlechterung z.B. durch austretende Schmierstoffe vermieden ist.

Erfindungsgemäß wird diese Aufgabe mit den Merkmalen des Patentanspruchs 1 gelöst. Vorteilhafte Ausgestaltungen der Erfindung sind Gegenstand von Unteransprüchen. Eine neuartige Verwendung der Erfindung ist in Patentanspruch 18 angegeben.

Der Kerngedanke der Erfindung besteht darin, dass kein wippenartiger Hebelarm zur Übertragung der Bewegung von einem Stößel auf den anderen verwendet wird, sondern die Übertragung indirekt durch Wälzkörper erfolgt. Dabei sind die Wälzkörper in einer geschlossenen Wälzkörperbahn angeordnet, die entweder innerhalb eines Korpus der Betätigungsvorrichtung oder an dessen Umfang, durchgehend umlaufend, ausgebildet ist. Dabei sind so viele Wälzkörper in die Rinne, die die Wälzkörperbahn bildet, eingebracht, dass die Wälzkörper benachbart unmittelbar aneinander anliegen. Des Weiteren sind in der Rinne die Mitnehmer zweier Stößel angeordnet. Wird nun eine erste Bewegung auf den ersten Stößel übertragen bzw. der erste Stößel betätigt, so verschiebt er, über seinen Mitnehmer, die in der Rinne angeordneten Wälzkörper in einer ersten Bewegungsrichtung. Dies überträgt sich von Wälzkörper zu Wälzkörper auf den Mitnehmer des zweiten Stößels, der mitgenommen wird und derart die Bewegung des ersten Stößels auf den zweiten Stößel übertragen wird. Dadurch, dass die Rinne vollständig mit Wälzkörpern und den beiden Mitnehmern gefüllt ist, werden Bewegungen in beiden Richtungen des ersten Stößels auf den zweiten Stößel übertragen und umgekehrt.

Das bedeutet, dass eine Bewegung des einen Stößels egal in welcher Richtung unmittelbar und im wesentlichen spielfrei auf den anderen Stößel übertragen wird.

Der Vorteil der Erfindung besteht darin, dass insbesondere bei einer Ausbildung der Rinne im Inneren des Korpus das Austreten von Schmierstoffen nach außen wirkungsvoll vermieden ist. Zudem kann, bei geeigneter Gestaltung der Form der Rinne, ein wesentlich längerer Hub eines Stößels erzielt werden, z.B. indem ein gerader Abschnitt der Rinne, entlang dem der Mitnehmer des ersten Stößels geführt wird, sehr lang ausgebildet wird, und der entsprechende Abschnitt für den zweiten Mitnehmer bzw. Stößel ebenso.

Als im Rahmen der Erfindung soll auch eine Anordnung zu verstehen sein, bei der z. B. in einem geraden Abschnitt der Rinne mehrere Wälzkörper durch ein einziges Verlängerungsstück, dessen Querschnitt an die Rinne angepasst ist, ersetzt sind. Damit können Wälzkörper eingespart werden. Hierbei überträgt der dem Verlängerungsstück unmittelbar benachbarte Wälzkörper seine Bewegung auf das Verlängerungsstück und umgekehrt.

Dabei können die geraden Abschnitte der Rinne, in denen die Mitnehmer jeweils geführt sind, eine beliebige Ausrichtung zueinander haben. Sie müssen nicht parallel zueinander angeordnet sein sondern können z. B. in einem spitzen oder stumpfen Winkel zueinander ausgerichtet sein.

Vorzugsweise sind die Wälzkörper Kugeln, Walzen oder tonnenförmige Körper. Die entsprechende Ausbildung der Rinne am oder in dem Korpus ist dem Fachmann möglich, ebenso wie die Auswahl der geeigneten, verschleißarmen Materialien, wie z.B. hochfeste Stähle und harte Kunststoffe, für Wälzkörper und Rinne.

Bevorzugt ist die Rinne im Wesentlichen vollständig im Inneren des Korpus ausgebildet. Dies hat zum einen den Vorteil, dass die Wälzkörper in der Rinne unverlierbar angeordnet sind. Zum anderen kann die Vorrichtung an sich, wie im Folgenden beschrieben, in einfacher Weise hergestellt werden. Auch ist ein Austreten von Schmierstoffen bei einer im Inneren eines Korpus angeordneten Rinne im Wesentlichen vermieden.

In einfacher Weise sind die Stößel, die betätigt werden, als Stangen mit rundem, rechteckigem oder quadratischem Querschnitt ausgebildet. Sie können an einem ihrer freien Enden, das z.B. aus dem Korpus herausragt, auch mit Anschlussvorrichtungen versehen sein, um mit weiteren Bauteilen/Vorrichtungen zusammenwirken zu können. Z.B. kann an einem oder beiden Enden eines Stößels eine Gewindeverschraubung ausgebildet sein, um mit weiteren Bauteilen, wie einem Rohr mit Gewinde, verschraubt zu werden, um eine Längenanpassung des Stößels an unterschiedliche Gegebenheiten zu ermöglichen.

Zur Führung der Stößel im Korpus ist dieser mit Bohrungen versehen, deren Querschnitt auf den Querschnitt der stangenartigen Stößel abgestimmt ist. Die Bohrungen durchgreifen den Korpus entweder vollständig, so dass der Stößel mit beiden Enden aus dem Korpus herausragt. Die Bohrung kann aber auch nur teilweise in den Korpus eingebracht sein, so dass die Bewegung des Stößels in einer Richtung durch die Bohrung begrenzt ist.

Zur Übertragung der Bewegung des einen Stößels auf die Wälzkörper und damit indirekt auf den zweiten Stößel dienen die Mitnehmer. Diese können lösbar an dem jeweiligen Stößel befestigbar ausgebildet sein. Z.B. derart, dass ein als Mitnehmer dienender Stift in eine korrespondierende Bohrung in dem Stößel, im Wesentlichen senkrecht zur Längserstreckung des Stößels, einsetzbar ist. Es können Rasteinrichtungen zur lösbaren Festlegung des Mitnehmers am Stößel vorgesehen sein.

Ebenso gut kann der Mitnehmer einstückig mit dem Stößel bei dessen Herstellung oder durch eine nachträgliche dauerhafte Verbindung, wie z.B. Schweißen, ausgebildet sein.

Zur Anpassung der Betätigungsvorrichtung an unterschiedliche Gegebenheiten ist die Lage des Mitnehmers relativ zum Stößel, d.h. entlang seiner Längserstreckung, veränderbar festlegbar. Dazu können z.B. über die Längserstreckung des Stößels mehrere vorstehend beschriebene Bohrungen ausgebildet sein, in die der Mitnehmer jeweils einsteckbar ist.

Damit der Mitnehmer des Stößels mit den Wälzkörpern in der Rinne zusammenwirken kann, besteht zwischen der Rinne für die Wälzkörper und der Bohrung für die Stößel eine Verbindung, die in vorteilhafter Weise als Langloch ausgebildet ist. Entlang dieses Langlochs ist der Mitnehmer verschiebbar, dabei ist es im Rahmen der Erfindung beliebig, ob der Durchmesser bzw. die lichte Weite der Bohrung oder der Rinne größer ist als der jeweils andere Durchmesser. Beide können auch gleichgroß gewählt werden. Ist der Stößel in seine Bohrung eingesetzt, ist zudem wirkungsvoll vermieden, dass bei einem kleineren Durchmesser der Rinne als der Bohrung, dass Wälzkörper aus der Rinne unbeabsichtigt herausfallen könnten.

Die Rinne kann durch zwei jeweils halbkreisförmige Abschnitte gebildet sein sowie zwei dazwischen angeordneten im Wesentlichen geradlinig verlaufenden Abschnitten. Die Mitnehmer der Stößel sind dabei entlang der geradlinigen Abschnitte geführt.

Der Korpus der Betätigungsvorrichtung ist zur vereinfachten Herstellung aus mehreren Elementen zusammengesetzt. Diese können lösbar oder dauerhaft miteinander verbunden sein. Der Korpus besteht in bevorzugter Weise aus Metall oder einem geeigneten Kunststoff, wobei die Auswahl des Materials für den Korpus in Abstimmung auf die Wälzkörper, die Stößel sowie die jeweils erforderlichen Belastungen dem Fachmann möglich ist.

Der Korpus kann auch derart ausgeformt sein, dass er aus nur zwei, im Wesentlichen senkrecht zueinander ausgerichteten, Elementen besteht, die jeweils gegeneinander verdrehbar sind. Dabei sind die Stößel derart an den Elementen angeordnet, dass sie aus den jeweils freien Enden der länglichen Elemente herausragen. Mit einer derartigen Betätigungsübertragungsvorrichtung ist eine Umlenkung der Bewegung um beliebige Winkel z. B. 90° ermöglicht. Dabei sind die Rinnen in oder an den Elementen derart angeordnet, dass sie gemeinsam eine durchgehend umlaufende Wälzkörperbahn bilden.

Zur Verbindung der beiden Elemente miteinander sind diese jeweils in einer entsprechend ausgebildeten Hülse eingesetzt, wobei die Hülsen an ihren jeweils aufeinander zuweisenden Seiten mit, im Rahmen der Erfindung beliebig gestaltbaren, drehbaren Verbindungsvorrichtungen, z.B. Flanschen, versehen sind. Des Weiteren verfügen die Hülsen über Durchbrüche, die von den Stößeln an den Elementen durchgriffen sind.

Bevorzugt sind die Stößel mit ihren Mitnehmern derart angeordnet, dass beim Einschieben eines Stößels in die Betätigungsvorrichtung der andere Stößel aus dieser herausgedrückt wird und umgekehrt.

Um beim Verdrehen der Hülsen relativ zueinander zu gewährleisten, dass die Wälzkörperbahn an den beiden Elementen geschlossen bleibt, sind an den Seiten der Elemente, die im verbundenen Zustand der Elemente einander zugewandt sind, Eingriffsvorrichtungen ausgebildet, über die die beiden Elemente miteinander in Eingriff stehen. Dies können in einfacher Weise Nut und Feder an den Elementen sein.

Desweiteren ist an der Verbindungsstelle zwischen den beiden Hälften eine verdrehbare Scheibe in der Wälzkörperbahn bzw. der Rinne angeordnet, um beim Verdrehen der beiden Hälften zueinander die Gesamtlänge der Wälzkörperbahn konstant zu halten.

Es ist auch möglich, dass an der Betätigungsvorrichtung mehr als zwei Stößel, also z.B. drei oder vier, angeordnet sind. Dazu sind an dem Korpus entsprechende Bohrungen für die Stößel vorgesehen, die über entsprechende Langlöcher mit Abschnitten der Rinne in Verbindung stehen. Z.B. kann die durchgehende Wälzkörperbahn bzw. die Rinne im Wesentlichen rechteckig oder quadratisch mit abgerundeten Ecken ausgebildet sein und entlang jeder Seite des Rechtecks oder Quadrats ein Stößel angeordnet sein, so dass die Bewegung des einen Stößels in eine Richtung auf die drei anderen Stößel übertragen wird.

Bevorzugter Weise wird die Betätigungsvorrichtung als Auswerfeinheit an einer Gussform, insbesondere Spritzgießform, verwendet. Bei Spritzgießformen tritt es häufig auf, dass der aus Kunststoff gegossene Körper an einer der beiden Formen bzw. der Auswerfeinheit haften bleibt, wenn die Formen nach dem Gießen wieder geöffnet werden. Dann muss der gegossene Körper von einem Bediener aufwändig von Hand gelöst und aus der Form entnommen werden. Um dies zu vermeiden sind im Stand der Technik Auswerfer bekannt, die nach dem Wippenprinzip arbeiten. Das bedeutet, dass beim Herunterfahren einer unteren Formhälfte diese einen ersten Stößel betätigt, der über eine Wippe mit einem zweiten Stößel in Verbindung steht. Dadurch wird der zweite Stößel nach oben bewegt. Des weiteren ist in der unteren Form ein Durchbruch für den zweiten Stößel ausgebildet, so dass durch das Herunterfahren der Form der zweite Stößel nach oben durch die Form bewegt wird. Dabei hebt er das (Spritz-)gießteil aus der Form heraus bzw. von den Auswerfern ab und das Gießteil fällt vorzugsweise von selbst aus der Spritzgießform heraus.

Speziell für diesen Einsatz eignet sich die erfindungsgemäße Bewegungsübertragungsvorrichtung. Je nach Ausgestaltung der Länge der geradlinig verlaufenden Rinnenabschnitte sind für die Stößel große Hübe möglich. Die Bewegungsübertragungsvorrichtung ist derart an einer Spritzgießmaschine angeordnet, dass die untere Formhälfte, wenn sie nach unten fährt, den ersten Stößel betätigt. Diese Betätigung wird auf den zweiten Stößel übertragen, der dadurch, z.B. durch einen an sich bekannten Durchbruch in der unteren Form hindurch das Spritzgießteil aus der unteren Form auswirft. Eine entsprechende Anordnung der Befestigung der Bewegungsübertragungsvorrichtung an einer Spritzgießwerkzeug ist dem Fachmann möglich. Ebenso kann die erfindungsgemäße Vorrichtung als Auswerfeinheit an einer Gießform ausgebildet sein, die relativ zu der Gießform verfahrbar ist. Hierbei ist der Vorteil gegeben, dass einerseits große Hübe möglich sind und andererseits durch die nach außen gekapselte Ausbildung der Vorrichtung das Austreten von Schmierstoffen vermieden ist.

Weitere Einzelheiten, Merkmale und Vorteile der Erfindung sind dem nachfolgenden Beschreibungsteil entnehmbar, in dem anhand von Zeichnungen Ausführungsbeispiele der Erfindung näher dargestellt sind. Es zeigen:
- Figur 1:: Eine erfindungsgemäße Vorrichtung in geschnittener Darstellung,
- Figur 2:: eine weitere Schnittdarstellung,
- Figur 3:: zwei Stößel,
- Figur 4: eine Vorrichtung im Querschnitt, und
- Figur 5: eine weitere Ausführungsform der Vorrichtung.

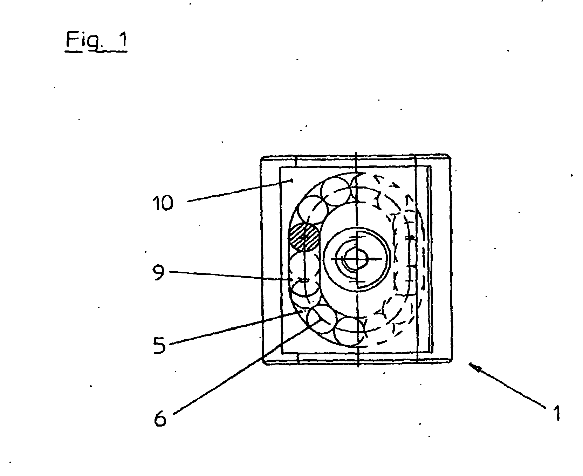

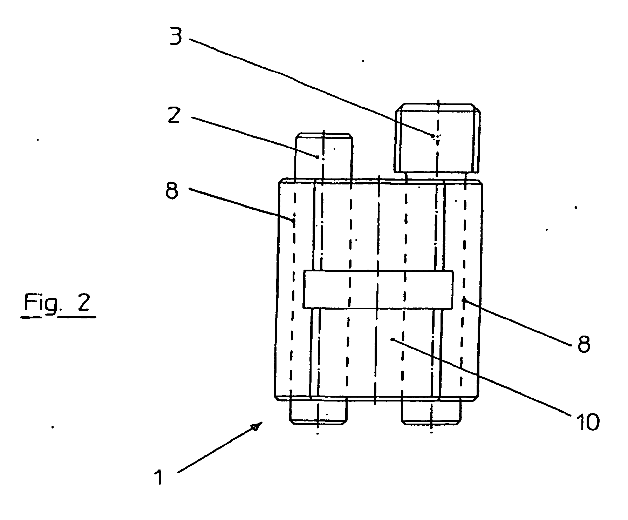

Bei dem in Figuren 1 und 2 dargestellten Ausführungsbeispiel der Erfindung handelt es sich um eine Betätigungsvorrichtung 1, die durch einen Korpus 10 gebildet ist. In dem Korpus 10 sind Bohrungen 8 ausgebildet, die hier den Korpus 10 vollständig durchgreifen. In den Bohrungen 8 sind jeweils entsprechend ausgebildete Stößel 2, 3 in Form von Stangen eingesetzt. Die Stößel 2, 3 sind in den Bohrungen 8 relativ zum Korpus 10 bewegbar.

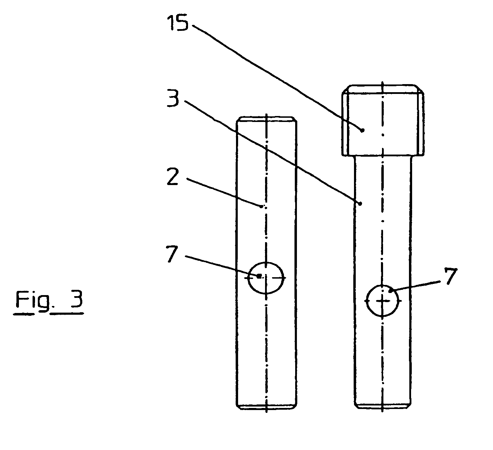

Wie in Figur 3 dargestellt, ist der Stößel 2, 3 eine im Wesentlichen runde Stange. Er kann aber auch andere Querschnitte, wie rechteckig oder quadratisch, aufweisen. An dem Stößel 2, 3 ist ein Mitnehmer 7 entweder einstückig dauerhaft fest oder lösbar angeordnet. Z.B. kann der Mitnehmer 7 in mehrere, über die Länge des Stößels 2, 3 verteilt angeordnete Bohrungen im Stößel 2, 3 eingesetzt und gegebenenfalls auch verrastet oder anderweitig lösbar befestigt sein. Damit kann die Übertragungsvorrichtung 1 an unterschiedliche Anforderungen angepasst werden. Die Stößel 2, 3 können auch beidseitig mit Vorrichtungen zum Verbinden mit weiteren Bauteilen, z. B. einem Gewindeabschnitt 15, versehen sein.

In dem Korpus 10 ist eine durchgehende, in sich geschlossene Rinne 5 für Wälzkörper 6, hier in Form von Kugeln, ausgebildet. Die Rinne 5 besteht aus zwei, im Wesentlichen halbkreisförmigen Abschnitten, mit zwei dazwischen angeordneten geraden Abschnitten. An den geraden Abschnitten ist ein Langloch 9 ausgebildet, über das die Bohrung 8 mit der Rinne 5 in Verbindung steht. Über dieses Langloch 9 kann der Mitnehmer 7 des Stößels 2, 3 in die Rinne 5 eingreifen, wobei der Mitnehmer 7 zwischen zwei benachbarten Wälzkörpern 6 angeordnet ist.

Die Rinne 5 ist vollständig mit den Wälzkörpern 6 sowie den beiden Mitnehmern 7 gefüllt, d.h. dass sie alle im Wesentlichen unmittelbar aneinander anliegen. Somit wird eine Bewegung des ersten Stößels 2 nach unten auf die unterhalb des Mitnehmers 7 des Stößels 2 in der Rinne 5 angeordneten Wälzkörper übertragen und auf der anderen Seite der Rinne 5 auf den Mitnehmer 7 des zweiten Stößels 3. Somit wird dieser Stößel 3 nach oben bewegt. Im umgekehrten Falle, d.h. also wenn der Stößel 2 nach oben bewegt wird, wird der Stößel 3 nach unten bewegt.

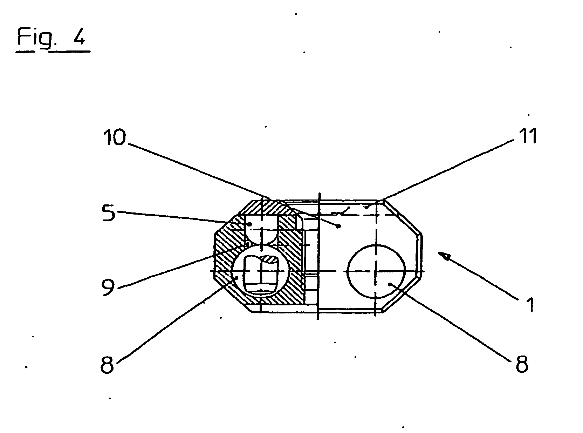

Zur einfachen Herstellung der Betätigungsvorrichtung 1 ist diese mehrteilig ausgebildet, z.B. wie in Figur 4 dargestellt, aus zwei Elementen 10, 11, nämlich dem Korpus 10 und dem Deckel 11. Die dauerhafte oder lösbare Verbindung der einzelnen Elemente 10, 11 der Betätigungsvorrichtung 1 miteinander ist dem Fachmann auf vielfältige Weise möglich.

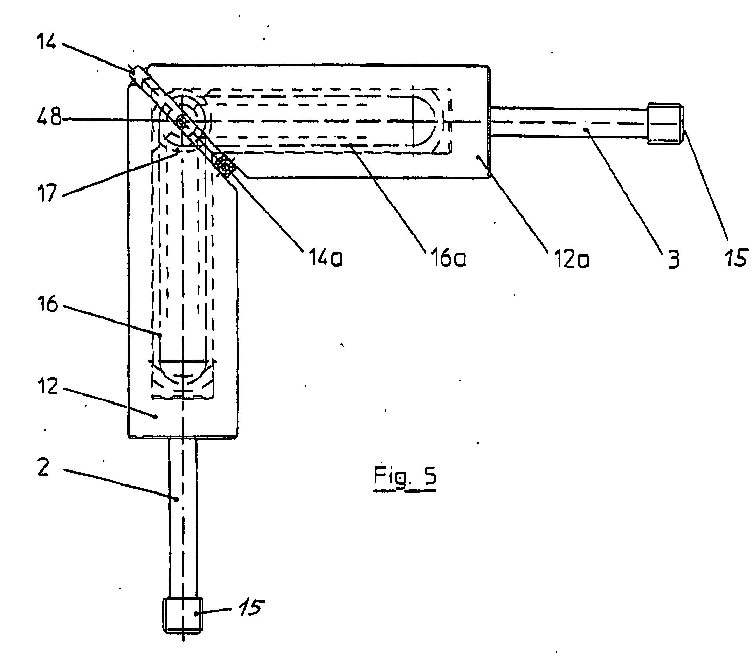

Eine weitere Ausführungsform der Erfindung ist in Figur 5 dargestellt. Dabei sind zwei längliche Elemente 16, 16a im Wesentlichen senkrecht zueinander ausgerichtet. An ihren jeweiligen freien Enden sind Stößel 2, 3 angeordnet. Die beiden Elemente 16, 16a sind ihrerseits in Hülsen 12, 12a verdrehbar zu diesen Hülsen 12, 12a eingesetzt. Die Hülsen 12, 12a sind an ihren Stirnseiten mit Verbindungsvorrichtungen 14, 14a, hier in Form von Flanschen und diese umgreifende Halbschalen versehen, mit denen die Hülsen 12, 12a relativ zueinander verdrehbar miteinander verbindbar sind.

Um zu gewährleisten, dass die Länge der in sich geschlossenen Rinne 5 im Inneren der Bewegungsübertragungsvorrichtung 1 auch bei einem Verdrehen der Hülsen 12, 12a zueinander konstant bleibt, ist zwischen den Elementen 16, 16a an den einander zugewandten Seiten der Elemente 16, 16a eine auf einem Lagerstift 48 verdrehbare Scheibe 17 angeordnet, die einen Teil der Rinne 5 bildet. Werden die Hülsen 12, 12a relativ zueinander verdreht, um z.B. die Übertragung einer Bewegung des ersten Stößels 2 auf den zweiten Stößel 3 in einer anderen Richtung zu ermöglichen, so ist gewährleistet, dass die Elemente 16, 16a derart zueinander ausgerichtet bleiben, daß die Rinne 5 in sich geschlossen ist. Mit der Scheibe 17 ist zudem ein Längenausgleich an dieser Umlenkstelle gegeben.

Die Mitnehmer 7 der Stößel 2, 3 sind hier derart in der Rinne 5 angeordnet, dass beim Einschieben eines Stößels 2 in die Vorrichtung 1 der andere Stößel 3 aus dieser herausfährt.

Mit den erfindungsgemäßen Vorrichtungen 1 können z. B. FilmScharniere an Kunststoffteilen in der Spritzgießform bei der Herstellung bewegt werden, um sie gelenkig zu machen. Es ist auch möglich mehrere gleichartige Vorrichtungen 1 zu Auswerferplatten zusammenzufassen oder eine Auswerfeinheit in Schrägrichtung bzgl. der Spritzgießform wirken zu lassen.

### Bezugszeichenliste

- 1: Bewegungsübertragungsvorrichtung
- 2, 3: Stößel
- 5: Rinne in oder an Pos. 10
- 6: Wälzkörper in Pos. 5
- 7: Mitnehmer an Pos. 2 und 3
- 8: Bohrung für Pos. 2 und 3 in Pos. 10
- 9: Langloch
- 10: Korpus von Pos. 1
- 11: Deckel von Pos. 10
- 12, 12a: Hülse für Pos. 16 und 16a
- 14, 14a: Verbindungsvorrichtung an Pos. 12 und 12a
- 15: Gewinde an Pos. 2 und 3
- 16, 16a: Elemente von Pos. 1
- 17: Scheibe in Pos. 1
- 48: Lagerzapfen(-stift) für Pos. 17

## Patentansprüche

1. Bewegungsübertragungsvorrichtung (1) mit
- einem ersten Stößel (2), der in oder an einem Korpus (10) bewegbar ist,
- einem zweiten Stößel (3), der in oder an dem Korpus (10) bewegbar ist, wobei
- in oder an dem Korpus (10) eine Rinne (5) ausgebildet ist, und wobei
- in der Rinne (5) Wälzkörper (6) aneinander anliegend eingebracht sind,
**dadurch gekennzeichnet, dass**
- die Rinne (5) in sich geschlossen ist,
- an den Stößeln (2, 3) jeweils ein Mitnehmer (7) angeordnet ist, und
- die Mitnehmer (7) in die Rinne (5) eingreifen, wobei die Mitnehmer (7) zwischen zwei benachbarten Wälzkörpern (6) angeordnet sind.

2. Bewegungsübertragungsvorrichtung (1) nach Anspruch 1,
**dadurch gekennzeichnet,dass**
die Wälzkörper (6) Kugeln, tonnenförmige Körper oder Walzen sind.

3. Bewegüngsübertragungsvorrichtung (1) nach Anspruch 1 oder 2,
**dadurch gekennzeichnet, dass**
die Rinne (5) an der Außenseite des Korpus (10) ausgebildet ist.

4. Bewegungsübertragungsvorrichtung (1) nach Anspruch 1 oder 2,
**dadurch gekennzeichnet, dass**
die Rinne (5) im Wesentlichen im Innern des Korpus (10) als Röhre ausgebildet ist.

5. Bewegungsübertragungsvorrichtung (1) nach einem der vorhergehenden Ansprüche,
**dadurch gekennzeichnet, dass**
die Stößel (2, 3) runde Stangen sind.

6. Bewegungsübertragungsvorrichtung (1) nach einem der vorhergehenden Ansprüche,
**dadurch gekennzeichnet,dass**
der Korpus (10) mit Bohrungen (8) für die Stößel (2, 3) versehen ist, die den Korpus (10) zumindest teilweise oder vollständig durchgreifen.

7. Bewegungsübertragungsvorrichtung (1) nach einem der vorhergehenden Ansprüche,
**dadurch gekennzeichnet,dass**
die Mitnehmer (7) lösbar am Stößel (2, 3) befestigbar sind.

8. Bewegungsübertragungsvorrichtung (1) nach
Anspruch 1, 2, 3, 4, 5 oder 6,
**dadurch gekennzeichnet,dass**
die Mitnehmer (7) einstückig mit den Stößeln (2, 3) ausgebildet sind.

9. Bewegungsübertragungsvorrichtung (1) nach
Anspruch 1, 2, 3, 4, 5, 6 oder 7,
**dadurch gekennzeichnet, dass**
die Lage der Mitnehmer (7) am Stößel (2, 3) veränderbar ist.

10. Bewegungsübertragungsvorrichtung (1) nach einem der vorhergehenden Ansprüche,
**dadurch gekennzeichnet,dass**
die Bohrung (8) für die Stößel (2, 3) und die Rinne (5) für die Wälzkörper (6) und die Mitnehmer (7) miteinander über ein Langloch (9) in Verbindung stehen.

11. Bewegungsübertragungsvorrichtung (1) nach einem der vorhergehenden Ansprüche,
**dadurch gekennzeichnet, dass**
die Rinne (5) im Korpus (10) gerade Abschnitten aufweist, die in beliebigen Winkeln zueinander angeordnet sind.

12. Bewegungsübertragungsvorrichtung (1) nach einem der vorhergehenden Ansprüche,
**dadurch gekennzeichnet,dass**
der Korpus (10) aus mehreren Einzelteilen besteht.

13. Bewegungsübertragungsvorrichtung (1) nach Anspruch 12,
**dadurch gekennzeichnet,dass**
der Korpus (10) aus zwei im Wesentlichen länglichen Elementen (16, 16 a) besteht, die zueinander in beliebigen Winkeln verdrehbar sind.

14. Bewegungsübertragungsvorrichtung (1) nach Anspruch 13,
**dadurch gekennzeichnet,dass**
die beiden Elemente (16, 16 a) jeweils in einer Hülse (12, 12 a) angeordnet sind, wobei die Hülsen (12, 12 a) relativ zueinander verdrehbar miteinander verbunden sind.

15. Bewegungsübertragungsvorrichtung (1) nach Anspruch 13 oder 14,
**dadurch gekennzeichnet, dass**
zwischen den Elementen (16, 16 a) in der Rinne (5) eine auf einem Lagerzapfen (48) verdrehbare Scheibe (17) angeordnet ist.

16. Bewegungsübertragungsvorrichtung (1) nach einem der vorhergehenden Ansprüche,
**dadurch gekennzeichnet, dass**
mehrere Stößel (2, 3) am Korpus (10) angeordnet sind.

17. Verwendung einer Bewegungsübertragungsvorrichtung nach einem der Ansprüche 1 bis 16,
**dadurch gekennzeichnet, dass**
sie als Auswerfereinheit oder Entformungsantrieb an einer Gießform, insbesondere Spritzgießform, verwendet wird.

## Claims

1. Movement transfer device (1) comprising
- a first ram (2) movable in or at a body (10),
- a second ram (3) movable in or at the body (10), wherein
- a channel (5) is formed in or at the body (10) and wherein
- rolling bodies (6) are arranged in the channel (5) to bear against one another,
**characterised in that**
- a channel (5) is closed in itself,
- a respective entrainer (7) is arranged at each of the rams (2, 3) and
- the entrainers (7) engage in the channel (5), wherein the entrainers (7) are arranged between two adjacent rolling bodies (6).

2. Movement transfer device (1) according to claim 1, **characterised in that** the rolling bodies (6) are balls, barrel-shaped bodies or rollers.

3. Movement transfer device (1) according to claim 1 or 2, **characterised in that** the channel (5) is formed at the outer side of the body (10).

4. Movement transfer device (1) according to claim 1 or 2, **characterised in that** the channel (5) is formed substantially in the interior of the body (10) as a tube.

5. Movement transfer device (1) according to one of the preceding claims, **characterised in that** the rams (2, 3) are round rods.

6. Movement transfer device (1) according to one of the preceding claims, **characterised in that** the body (10) is provided with bores (8) for the rams (2, 3), which engage through the body (10) at least partly or completely.

7. Movement transfer device (1) according to one of the preceding claims, **characterised in that** the entrainers (7) are detachably fastenable to the rams (2, 3).

8. Movement transfer device (1) according to claim 1, 2, 3, 4, 5 or 6, **characterised in that** the entrainers (7) are formed integrally with the rams (2, 3).

9. Movement transfer device (1) according to claim 1, 2, 3, 4, 5, 6 or 7 **characterised in that** the position of the entrainers (7) at the ram (2, 3) is variable.

10. Movement transfer device (1) according to one of the preceding claims, **characterised in that** the bore (8) for the rams (2, 3) and the channel (5) for the rolling bodies (6) and the entrainers (7) are connected together by way of a slot (9).

11. Movement transfer device (1) according to one of the preceding claims, **characterised in that** the channel (5) in the body (10) has straight sections which are arranged at desired angles relative to one another.

12. Movement transfer device (1) according to one of the preceding claims, **characterised in that** the body (10) consists of several individual parts.

13. Movement transfer device (1) according to claim 12, **characterised in that** the body (10) consists of two substantially elongate elements (16, 16a) which are rotatable relative to one another at desired angles.

14. Movement transfer device (1) according to claim 13, **characterised in that** the two elements (16, 16a) are each arranged in a respective sleeve (12, 12a), wherein the sleeves (12, 12a) are connected together to be rotatable relative to one another.

15. Movement transfer device (1) according to claim 13 or 14, **characterised in that** a disc (17) rotatable on a bearing pin (48) is arranged between the elements (16, 16a) in the channel (5).

16. Movement transfer device (1) according to one of the preceding claims, **characterised in that** several rams (2, 3) are arranged at the body (10).

17. Use of a movement transfer device according to one of claims 1 to 16, **characterised in that** it is used as an ejection unit or mould removal drive at a casting mould, particularly an injection mould.

## Revendications

1. Dispositif (1) pour la transmission d'un mouvement, avec
- un premier poussoir (2), qui peut être déplacé dans ou sur un corps (10),
- un deuxième poussoir (3), qui peut être déplacé dans ou sur le corps (10),
- sachant qu'une rigole (5) est formée dans ou sur le corps (10),
- et sachant que des corps de révolution (6) sont mis en place en application mutuelle dans la rigole (5),
**caractérisé en ce que**
- la rigole (5) est en soi fermée,
- un entraîneur (7) est disposé sur chacun des poussoirs (2, 3), et
- les entraîneurs (7) s'engagent dans la rigole (5), sachant que les entraîneurs (7) sont disposés entre deux corps de révolution voisins (6).

2. Dispositif (1) pour la transmission d'un mouvement selon la revendication 1, **caractérisé en ce que** les corps de révolution (6) sont des billes, des corps en forme de tonneaux ou des rouleaux.

3. Dispositif (1) pour la transmission d'un mouvement selon la revendication 1 ou 2, **caractérisé en ce que** la rigole (5) est configurée sur le côté extérieur du corps (10).

4. Dispositif (1) pour la transmission d'un mouvement selon la revendication 1 ou 2, **caractérisé en ce que** la rigole (5) est réalisée sous forme de tube pour l'essentiel à l'intérieur du corps (10).

5. Dispositif (1) pour la transmission d'un mouvement selon l'une des revendications précédentes, **caractérisé en ce que** les poussoirs (2, 3) sont des barres rondes.

6. Dispositif (1) pour la transmission d'un mouvement selon l'une des revendications précédentes, **caractérisé en ce que** le corps (10) est doté de perçages (8) pour les poussoirs (2, 3), qui traversent totalement ou au moins partiellement le corps (10).

7. Dispositif (1) pour la transmission d'un mouvement selon l'une des revendications précédentes, **caractérisé en ce que** les entraîneurs (7) peuvent être fixés de manière amovible sur les poussoirs (2, 3).

8. Dispositif (1) pour la transmission d'un mouvement selon la revendication 1, 2, 3, 4, 5 ou 6, **caractérisé en ce que** les entraîneurs (7) sont réalisés d'un seul tenant avec les poussoirs (2, 3).

9. Dispositif (1) pour la transmission d'un mouvement selon la revendication 1, 2, 3, 4, 5, 6 ou 7, **caractérisé en ce que** la position de l'entraîneur (7) sur le poussoir (2, 3) peut être modifiée.

10. Dispositif (1) pour la transmission d'un mouvement selon l'une des revendications précédentes, **caractérisé en ce que** le perçage (8) pour les poussoirs (2, 3) et la rigole (5) pour les corps de révolution (6) et les entraîneurs (7) sont mutuellement reliés par l'intermédiaire d'un trou oblong (10).

11. Dispositif (1) pour la transmission d'un mouvement selon l'une des revendications précédentes, **caractérisé en ce que** la rigole (5) présente dans le corps des parties rectilignes, qui sont disposées sous des angles quelconques les unes par rapport aux autres.

12. Dispositif (1) pour la transmission d'un mouvement selon l'une des revendications précédentes, **caractérisé en ce que** le corps (10) est constitué de plusieurs pièces détachées.

13. Dispositif (1) pour la transmission d'un mouvement selon la revendication 12, **caractérisé en ce que** le corps (10) est constitué de deux éléments (16, 16a) essentiellement oblongs, qui peuvent être tournés sous des angles quelconques l'un par rapport à l'autre.

14. Dispositif (1) pour la transmission d'un mouvement selon la revendication 13, **caractérisé en ce que** les deux éléments (16, 16a) sont chacun disposés dans un manchon respectif (12, 12a), les manchons (12, 12a) étant mutuellement reliés avec possibilité de rotation relative.

15. Dispositif (1) pour la transmission d'un mouvement selon la revendication 13 ou 14, **caractérisé en ce qu'**un disque (17) rotatif sur un pivot (48) est disposé entre les éléments (16, 16a) dans la rigole (5).

16. Dispositif (1) pour la transmission d'un mouvement selon l'une des revendications précédentes, **caractérisé en ce que** plusieurs poussoirs (2, 3) sont disposés sur le corps (10).

17. Utilisation d'un dispositif pour la transmission d'un mouvement selon l'une des revendications 1 à 16, **caractérisée en ce qu'**il est utilisé comme unité d'éjection ou comme entraînement de démoulage sur un moule, en particulier un moule d'injection.
